# FASCICULE DE BREVET EUROPEEN

(11) **EP 2 046 603 B1**
(45) Date de publication et mention de la délivrance du brevet: **09.12.2009**
(21) Numéro de dépôt: 07787718.1
(22) Date de dépôt: 19.07.2007
(51) Int. Cl.: B60P 1/64

(54) **DISPOSITIF DE CHARGEMENT ET DE DECHARGEMENT**
LADE- UND ENTLADEVORRICHTUNG
LOADING AND UNLOADING DEVICE

(30) Priorité: 28.07.2006 FR 0653164
(43) Date de publication de la demande: 15.04.2009
(73) Titulaire: De Carli, Jean-Claude, 06740 Châteauneuf de Grasse (FR)
(72) Inventeur: De Carli, Jean-Claude, 06740 Châteauneuf de Grasse (FR)
(74) Mandataire: Decobert, Jean-Pascal
(86) Numéro de dépôt international: PCT/EP2007/057460
(87) Numéro de publication internationale: WO 2008/012261

(56) Documents cités:
- EP-A- 0 811 525
- EP-A- 1 364 829
- DE-A1- 2 758 693
- DE-U1- 20 302 848
- GB-A- 2 028 279
- US-A- 3 638 817

## Description

La présente invention concerne un dispositif de chargement et de déchargement pour tout véhicule porteur et remorque.

Elle trouvera son application, en particulier, pour le chargement et le déchargement de tous types de conteneurs ouverts ou fermés tels des bennes ou des caissons dans tous les domaines, routiers, agricoles, forestiers etc.

Le terme conteneur s'entend au sens le plus large de tout matériel ou objet munis ou montés sur berces.

Le document US 3 638 817 décrit un dispositif pour le chargement de container sur des semi-remorques par un câble fixé audit container dans sa partie inférieure.

Le document EP 1 364 829 décrit un dispositif pour le chargement et de déchargement de container selon le préambule de la revendication 1.

Le dispositif présente l'inconvénient de nécessiter l'action de l'opérateur pour fixer le câble sur le container.

La présente invention tend à résoudre ce problème en proposant un dispositif de chargement et déchargement pour véhicule comportant :
- une conteneur muni de moyens de prise dans sa partie inférieure,
- un faux châssis sur le véhicule,
- un châssis basculant monté pivotant sur ledit faux châssis,
- un chariot coulissant sur ledit châssis basculant, apte à entraîner ledit conteneur sur ledit châssis basculant par des moyens d'entraînement aptes à coopérer avec lesdits moyens de prise dudit conteneur,
caractérisé par le fait qu'il comprend un bras monté rotatif à l'extrémité dudit faux châssis, ledit bras est muni de moyens d'accrochage aptes à coopérer avec des moyens de prise situés en partie inférieure dudit conteneur, ledit bras est apte à amener ledit conteneur d'une position sensiblement au sol à une position de mise à disposition du chariot coulissant en attente.

Ce dispositif a aussi l'avantage de permettre le chargement et le déchargement de conteneurs sous plafond car l'angle maximal formé entre le faux châssis et le châssis basculant est avantageusement de 15° maximum en position de chargement.

Selon un mode de réalisation, ledit bras est apte à s'étendre dans le sens de la longueur.

Selon un autre mode de réalisation, ledit bras a un mouvement rotatif horizontal.

Les deux derniers modes de réalisation décrits sont destinés à amener lesdits moyens d'accrochage au niveau desdits moyens de prise dudit conteneur, sans que l'opérateur effectue de nombreuses manoeuvres avec le véhicule porteur.

D'autres buts et avantages apparaîtront au cours de la description qui suit d'un mode préféré de réalisation de l'invention qui n'en est cependant pas limitatif.

Il convient de rappeler que l'invention concerne : un dispositif de chargement et déchargement pour véhicule comportant :
- une conteneur muni de moyens de prise dans sa partie inférieure,
- un faux châssis rapporté sur le véhicule,
- un châssis basculant monté pivotant sur ledit faux châssis,
- un chariot coulissant sur ledit châssis basculant, apte à entraîner ledit conteneur sur ledit châssis basculant par des moyens d'entraînement aptes à coopérer avec lesdits moyens de prise dudit conteneur,
caractérisé par le fait qu'il comprend un bras monté rotatif à l'extrémité dudit faux châssis, ledit bras est muni de moyens d'accrochage aptes à coopérer avec des moyens de prise situés en partie inférieure dudit conteneur, ledit bras est apte à amener ledit conteneur d'une position sensiblement au sol à une position de mise à disposition du chariot coulissant en attente.

Suivant des variantes préférées de l'invention, ledit dispositif est tel que :
- ledit bras est apte à s'étendre dans le sens de la longueur pour amener lesdits moyens d'accrochage au niveau desdits moyens de prise dudit conteneur,
- ledit bras a un mouvement rotatif horizontal destiné à amener lesdits moyens d'accrochage au niveau desdits moyens de prise dudit conteneur,
- ledit bras est commandé par un vérin fixé à une extrémité au faux châssis et à l'autre extrémité dudit bras articulé,
- ledit bras articulé est en forme de L comprenant : une branche longue présentant lesdits moyens d'accrochage, et une branche courte,
- ledit châssis basculant en position levée forme avec ledit faux châssis un angle de 15°.

Suivant d'autres modes de réalisation préférés mais non limitatifs, ledit dispositif est tel que :
- il comporte des premiers moyens de basculement aptes à pivoter le châssis basculant en position de chargement.
- il comporte des deuxièmes moyens de basculement aptes à pivoter le châssis basculant en position de bennage.
- lesdits premiers et deuxièmes moyens comportent au moins un double vérin dont les tiges sont mobiles en opposition de part et d'autre d'un corps de vérin.

Un autre objet de l'invention est un véhicule muni du dispositif précédemment décrit.

Les dessins ci-joints sont donnés à titre d'exemples et ne sont pas limitatifs de l'invention. Ils représentent seulement un mode de réalisation de l'invention et permettront de la comprendre aisément.

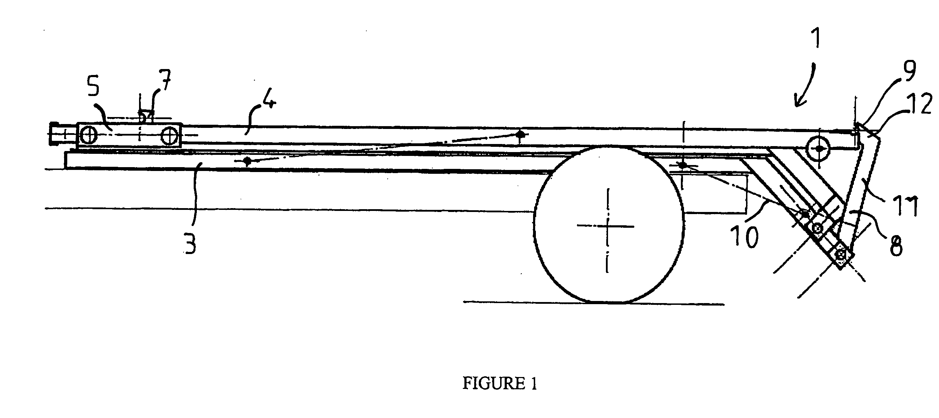

Figure 1 : vue du dispositif en position route.

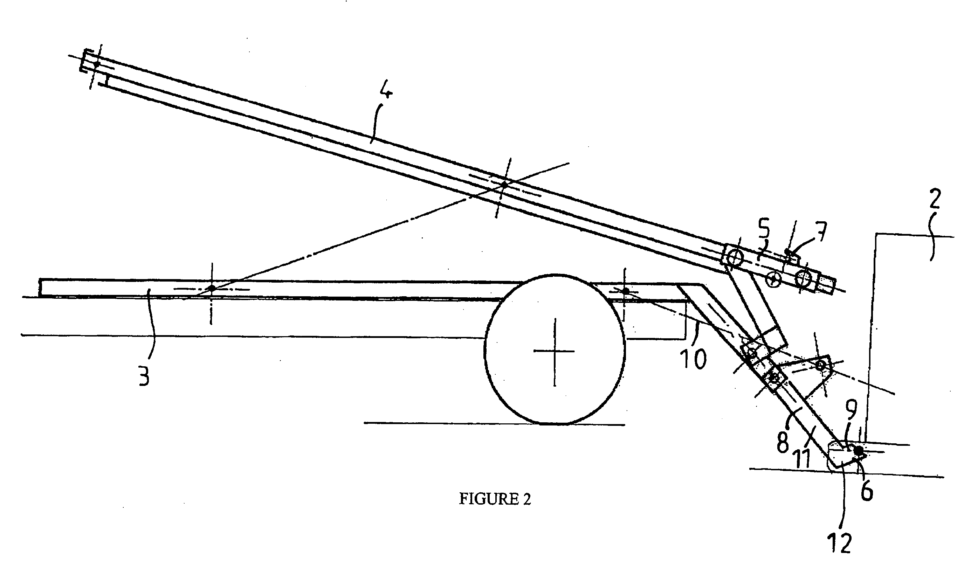

Figure 2 : vue du dispositif en position dépliée de chargement.

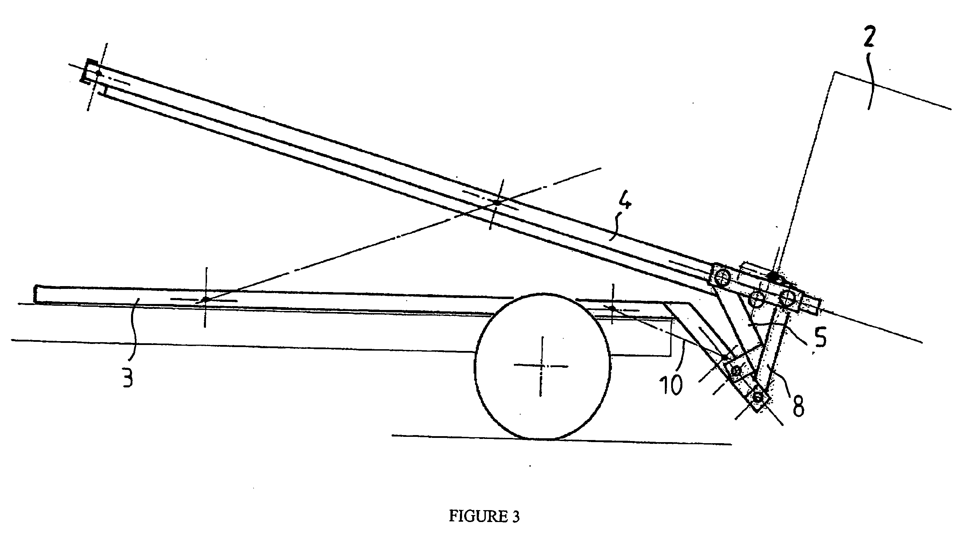

Figure 3 : vue du dispositif en position de transfert du conteneur du bras au chariot coulissant.

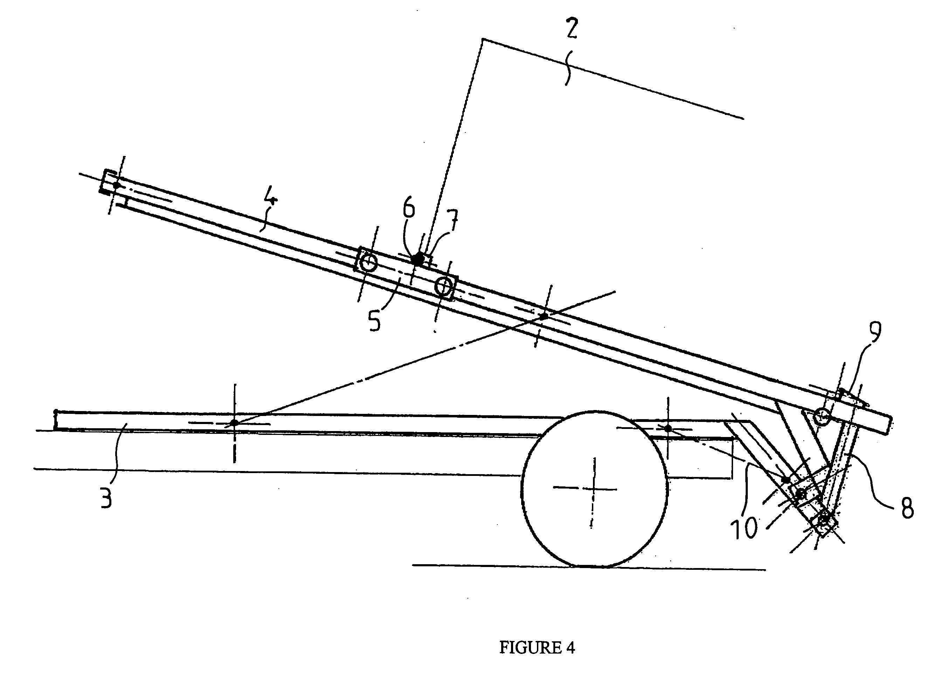

Figure 4 : vue du dispositif en position intermédiaire d'équilibre.
Figure 5 : vue du dispositif en position maximale.

Le dispositif 1 de chargement et déchargement par véhicule comporte :
- un conteneur (2) muni de moyens de prise (6) dans la partie inférieure,
- un faux châssis (3) rapporté ou faisant partie de la structure d'origine du véhicule, le terme faux châssis étant donc toute structure de réception de l'ensemble basculant,
- un châssis basculant (4) monté pivotant sur ledit faux châssis (3),
- un chariot (5) coulissant sur ledit châssis basculant (4) apte à entraîner ledit conteneur (2) sur ledit châssis basculant (4) par des moyens d'entraînement (7) aptes à coopérer avec lesdits moyens de prise (6) dudit conteneur (2).

L'ensemble est en toute matière courante et peut être une structure d'éléments mécano soudés.

Ledit dispositif (1) est caractérisé par le fait qu'il comprend un bras (8) monté rotatif à l'extrémité dudit faux châssis (3), ledit bras est muni de moyens d'accrochage (9) aptes à coopérer avec des moyens de prise (6) situés en partie inférieure dudit conteneur (2). Ledit bras (8) est apte à amener ledit conteneur (2) d'une position sensiblement au sol à une position de mise à disposition du chariot coulissant en attente.

Avantageusement, ledit bras (8) est apte à s'étendre dans le sens de la longueur pour amener lesdits moyens de d'accrochage (9) au niveau desdits moyens de prise (6) dudit conteneur (2).

Les moyens de prise (6) équipent le conteneur dès l'origine ou sont des moyens rapportés sur un conteneur de sorte à l'adapter à la destination de l'invention. Il s'agit alors d'un système d'interface pour conteneur non pourvu d'une prise d'accrochage en partie basse.

Avantageusement, dans le même objectif, ledit bras (8) a un mouvement rotatif horizontal.

Selon un mode de réalisation, le bras (8) est commandé par un vérin (10) fixé à une extrémité au faux châssis (4) et à l'autre extrémité audit bras (8).

Avantageusement, ledit bras (8) est en forme de L comprenant une branche longue présentant lesdits moyens d'accrochage (9) et une branche courte (12) servant de levier et sur laquelle est fixée le vérin (10) de commande.

L'extrémité du bras est constituée d'un crochet assurant la prise du conteneur en partie basse, et permettant la mise en disposition du chariot coulissant en partie haute.

### Exemple d'utilisation :

Lorsque l'opérateur veut déplacer un conteneur (2) il va amener un véhicule muni du dispositif (1) de chargement et déchargement à proximité dudit conteneur (2).

Le véhicule en question peut être de tous types tels porteurs, semi remorque, remorque. Il a une motorisation autonome ou non.

A cette étape, ledit dispositif (1) est en position route, c'est-à-dire que le châssis basculant (4) est rabattu sur le faux châssis (3) en position sensiblement horizontale par rapport au châssis du véhicule porteur, le bras (8) est replié, les moyens d'accrochage (9) étant au niveau du faux châssis (3).

Une fois que le véhicule est positionné à proximité du conteneur (2), l'opérateur actionne le châssis basculant (4) qui pivote par rapport au faux châssis (3).

Ce mouvement pivotant peut être obtenu par divers moyens connus dans l'art antérieur tels que des vérins à gaz, hydrauliques ou autres.

Le chariot (5) coulisse dans la partie inférieure du châssis basculant (4) par des moyens connus dans l'art antérieur tels que des chaînes avec renvoi de poulies, des vérins, des galetas, une vis sans fin, un câble, une crémaillière ou autres.

Enfin, le bras (8) se déplie sous l'action, avantageusement, d'un vérin (10) fixé à une extrémité au faux châssis (3) et à l'autre extrémité audit bras (8) au niveau de la branche courte (12). Les moyens d'accrochage (9) se retrouvent sensiblement au niveau du sol.

L'opérateur peut alors ajuster la position des moyens d'accrochage (9) par rapport aux moyens de prise (6) dudit conteneur (2), en contrôlant la longueur du bras (8) ainsi que sa position horizontale.

Une fois les moyens d'accrochage (9) positionnés au niveau des moyens de prise (6) dudit conteneur (2) (dans la partie inférieure), l'utilisateur actionne le bras (8) qui va décrire un mouvement rotatif vertical pour amener la benne (2) sensiblement au niveau du chariot coulissant (5).

Le chariot (5), muni de moyens d'entraînement (7) aptes à coopérer avec les moyens de prise (6) dudit conteneur (2) va entraîner ledit conteneur (2) sur le châssis basculant (4).

Le châssis basculant (4) revient progressivement à une position sensiblement horizontale au fur et à mesure que ledit conteneur (2) progresse sur le châssis basculant (4).

Ou selon un autre mode de réalisation, le châssis basculant (4) revient à une position sensiblement horizontale une fois ledit conteneur (2) placé entièrement sur ledit châssis basculant (4).

Le bras (8) reste en position repliée.

Pour le déchargement, les étapes se font en sens inverse.

Il est avantageux de limiter l'angle de basculement du châssis(4) en position de chargement, en particulier à une valeur de 15°, de sorte à ne produire qu'une élévation limitée durant cette phase. Cela permet particulièrement de charger dans des bâtiments, sous plafond et non seulement en milieux ouverts.

Pour le bennage, un basculement d'angle plus important est préférentiellement généré. A cet effet, le dispositif comporte deux séries de moyens de basculement dont l'une seulement est activée au chargement alors que les deux séries sont activées au bennage de sorte à additionner leur effet de pivot du châssis (4) basculant.

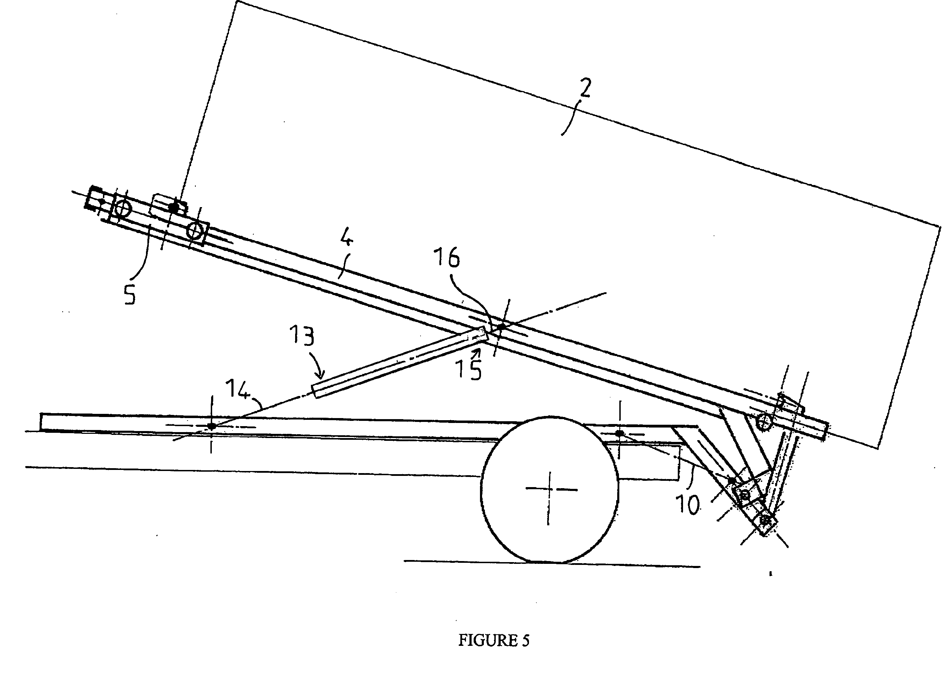

Dans l'ensemble illustré, on a représenté une possibilité de réalisation à la figure 5 avec un double vérin. Ce double vérin forme un premier vérin 13 suffisant en phase de chargement ( la course de sa tige 14 permettant d'atteindre un angle inférieur à 15°).

Le double vérin constitue aussi un deuxième vérin 15 dont la tige 16 est déployable suivant la même direction que la tige 14 mais dans un sens opposé si bien que les déploiements des deux tiges se cumulent pour pivoter plus amplement le châssis 4.

L'une des tiges, par exemple la tige (14) est articulée sur le faux châssis (3). L'autre tige, pouvant être la tige (16), est articulée sur le châssis basculant(4).

### REFERENCES

1. Dispositif
2. Conteneur
3. Faux châssis
4. Châssis basculant
5. Chariot
6. Moyens de prise
7. Moyens d'entraînement
8. Bras
9. Moyens d'accrochage
10. Vérin
11. Branche longue
12. Branche courte
13. Vérin de chargement
14. Tige
15. Vérin de bennage
16. Tige

## Revendications

1. Dispositif (1) de chargement et déchargement pour véhicule comportant :
- un conteneur (2) muni de moyens de prise (6) dans sa partie inférieure,
- un faux châssis (3) sur le véhicule (13),
- un châssis basculant (4) monté pivotant sur ledit faux châssis (3),
- un chariot (5) coulissant sur ledit châssis basculant (4), apte à entraîner ledit conteneur (2) sur ledit châssis basculant (4) par des moyens d'entraînement (7) aptes à coopérer avec lesdits moyens de prise (6) dudit conteneur (2),
un bras (8) muni de moyens d'accrochage (9) aptes à coopérer avec des moyens de prise (6) situés en partie inférieure dudit conteneur (2), **caractérisé en ce que** ledit bras (8) monté rotatif à l'extrémité dudit faux châssis (3) et est apte à amener ledit conteneur (2) d'une position sensiblement au sol à une position de mise à disposition du chariot coulissant (5).

2. Dispositif (1) selon la revendication 1 **caractérisé par le fait**
**que** ledit bras (8) est apte à s'étendre dans le sens de la longueur pour amener lesdits moyens d'accrochage (9) au niveau desdits moyens de prise (6) dudit conteneur (2).

3. Dispositif (1) selon une quelconque des revendications 1 ou 2 **caractérisé par le fait**
**que** ledit bras (8) a un mouvement rotatif horizontal destiné à amener lesdits moyens d'accrochage (9) au niveau desdits moyens de prise (6) dudit conteneur (2).

4. Dispositif (1) selon une quelconque des revendications précédentes **caractérisé par le fait**
**que** ledit bras (8) est commandé par un vérin (10) fixé à une extrémité au faux châssis (3) et à l'autre extrémité dudit bras (8) articulé.

5. Dispositif (1) selon une quelconque des revendications précédentes **caractérisé par le fait**
**que** ledit bras (8) articulé est en forme de L comprenant : une branche longue (11) présentant lesdits moyens d'accrochage (9), et une branche courte (12).

6. Dispositif (1) selon une quelconque des revendications précédentes **caractérisé par le fait**
**que** ledit châssis basculant (4) en position levée forme avec ledit faux châssis (3) un angle de 15°.

7. Dispositif selon une quelconque des revendications 1 à 6 comportant des premiers moyens de basculement aptes à pivoter le châssis basculant (4) en position de chargement.

8. Dispositif selon la revendication 7 comportant des deuxièmes moyens de basculement aptes à pivoter le châssis basculant (4) en position de bennage.

9. Dispositif selon la revendication 8 dans lequel lesdits premiers et deuxièmes moyens comportent au moins un double vérin (13, 15) dont les tiges (14, 16) sont mobiles en opposition de part et d'autre d'un corps de vérin.

10. Véhicule (13) muni du dispositif (1) selon une quelconque des revendications 1 à 9.

## Claims

1. Device (1) for vehicle loading and unloading comprising:
- a container (2) provided in its lower part with gripping means (6),
- a dummy underframe (3) on the vehicle (13),
- a pivoting chassis (4) fitted to tilt on said dummy underframe (3),
- a trolley (5) sliding on said pivoting chassis (4), able to bring said container (2) on said pivoting chassis (4) by drive means (7) able to act with said gripping means (6) of said container (2),
- an arm (8) provided with hooking means (9) able to coact with gripping means (6) located in lower part of said container (2),
**characterised in that** said arm (8) fitted to rotate at the end of said dummy underframe (3) and being able to bring said container (2) from a position roughly on the ground to a ready-to-operate position of sliding trolley (5).

2. Device (1) according to claim 1 **characterised in that** said arm (8) can extend lengthwise to bring said hooking means (9) to the level of said gripping means (6) of said container (2).

3. Device (1) according to any of claims 1 or 2 **characterised in that** said arm (8) has a horizontal rotary movement designed to bring said hooking means (9) to said gripping means (6) of said container (2).

4. Device (1) according to any of the preceding claims **characterised in that** said arm (8) is controlled by a hydraulic cylinder (10) fixed at one end to dummy underframe (3) and at the other end to said articulated arm (8).

5. Device (1) according to any of the preceding claims **characterised in that** said articulated arm (8) is L-shaped and comprises: a long arm (11) with said hooking means (9) and a short arm (12).

6. Device (1) according to any of the preceding claims **characterised in that** said pivoting chassis (4) in the raised position forms with said dummy underframe (3) an angle of 15°.

7. Device (1) according to any of claims 1 to 6 comprising firstly tilting means able to tilt the pivoting chassis (4) into the loading position.

8. Device (1) according to claim 7 comprising second tilting means able to tilt the pivoting chassis (4) into a dumping position.

9. Device (1) according to claim 8 in which said first and second means comprise at least one double acting hydraulic cylinder (13, 15) whose rods (14, 16) are mobile in opposite directions at both ends of the hydraulic cylinder.

10. Vehicle (13) equipped with device (1) according to any of claims 1 to 9.

## Patentansprüche

1. Vorrichtung (1) zum Be- und Entladen eines Fahrzeugs mit folgenden Teilen:
- Ein Behälter (2) mit Greifmitteln (6) in seinem unteren Teil,
- Ein falscher Unterbau (3) auf dem Fahrzeug (13),
- Ein Kipprahmen (4), der drehbar auf den besagten falschen Unterbau (3) montiert ist,
- Ein Schlitten (5), der auf dem besagten Kipprahmen (4) gleitet und geeignet ist, den besagten Behälter (2) durch Antriebsmittel (7) auf dem besagten Kipprahmen (4) zu führen, die geeignet sind, mit den besagten Greifmitteln (3) des besagten Behälters (2) zusammenzuwirken,
- Ein Arm (8), der mit Mitnahmemitteln (9) versehen ist, die geeignet sind, mit Greifmitteln (6) zusammenzuwirken, die sich am unteren Teil des besagten Behälters (2) befinden, **dadurch gekennzeichnet, daß** der besagte am Ende des besagten falschen Unterbaus (3) drehbar montierte Arm (8) geeignet ist, den besagten Behälter (2) von einer deutlich auf dem Boden befindlichen Position zu einer Übergabeposition des Gleitschlittens (5) zu führen.

2. Vorrichtung (1) nach Anspruch 1, **dadurch gekennzeichnet, daß** der besagte Arm (8) geeignet ist, sich im Sinne der Länge auszustrecken, um die besagten Mitnahmemittel (9) auf die Höhe der besagten Greifmittel (6) des besagten Behälters (2) zu führen.

3. Vorrichtung (1) nach einem beliebigen der vorstehenden Ansprüche 1 oder 2, **dadurch gekennzeichnet, daß** der besagte Arm (8) eine horizontale Drehbewegung hat, die dazu bestimmt ist, die besagten Mitnahmemittel (9) auf die Ebene der besagten Greifmittel (6) des besagten Behälters (2) zu führen.

4. Vorrichtung (1) nach einem beliebigen der vorstehenden Ansprüche, **dadurch gekennzeichnet, daß** der besagte Arm (8) von einem Arbeitszylinder (10) gesteuert wird, der an einem Ende am falschen Unterbau (3) und am anderen Ende des besagten Gelenkarms (8) befestigt ist.

5. Vorrichtung (1) nach einem beliebigen der vorstehenden Ansprüche, **dadurch gekennzeichnet, daß** der besagte Gelenkarm (8) eine L-Form mit folgenden Teilen hat: Ein langer Zweig (11), der die besagten Mitnahmemittel (9) aufweist, und ein kurzer Zweig (12).

6. Vorrichtung (1) nach einem beliebigen der vorstehenden Ansprüche, **dadurch gekennzeichnet, daß** der besagte Kipprahmen (4) in gehobener Position mit dem besagten falschen Unterbau (3) einen 15° Winkel bildet.

7. Vorrichtung nach einem beliebigen der vorstehenden Ansprüche 1 bis 6, **dadurch gekennzeichnet, daß** sie erste Kippmittel umfaßt, die geeignet sind, den Kipprahmen (4) in Ladeposition zu drehen.

8. Vorrichtung nach Anspruch 7, **dadurch gekennzeichnet, daß** sie zweite Kippmittel umfaßt, die geeignet sind, den Kipprahmen (4) in gefülltem Zustand zu drehen.

9. Vorrichtung nach Anspruch 8, **dadurch gekennzeichnet, daß** darin die besagten ersten und zweiten Mittel mindestens einen doppelten Arbeitszylinder (13, 15) umfassen, dessen Kolbenstangen (14, 16) gegeneinander zu beiden Seiten eines Zylinderkörpers beweglich sind.

10. Fahrzeug (13), das mit der Vorrichtung (1) nach einem beliebigen der vorstehenden Ansprüche 1 bis 9 versehen sind.
